(19)

Europäisches
Patentamt
European
Patent Office
Office européen
des brevets

(11) **EP 2 323 339 A2**

(12) **EUROPEAN PATENT APPLICATION**

(43) Date of publication:
**18.05.2011 Bulletin 2011/20**

(51) Int Cl.:
***H04L 29/06*** *(2006.01)*

(21) Application number: **10014406.2**

(22) Date of filing: **09.11.2010**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **12.11.2009 IL 20208509
12.11.2009 IL 20208609**

(71) Applicant: **Deutsche Telekom AG
53113 Bonn (DE)**

(72) Inventors:
 • **Altshuler, Yaniv
  Haifa 32983 (IL)**

 • **Elovici, Yuval
  79864 Israel (IL)**
 • **Dolev, Shiomi
  Omer 84965 (IL)**
 • **Shabtal, Asaf
  Ness-Ziona 74054 (IL)**
 • **Fledel, Yuval
  Lod 71400 (IL)**

(74) Representative: **Flaccus, Rolf-Dieter
  Flaccus · Müller-Wolff
  Patentanwälte
  Bussardweg 10
  50389 Wesseling (DE)**

(54) **A collaborative system for protecting against the propagation of malwares in a  network**

(57)     The present invention is a system for using a collective computing power of a plurality of network stations in a communication network in order to overcome threats generated by malicious applications. Collaboratively, a large group of simple network stations implement a vaccination mechanism, proliferating information concerning malicious applications (malwares) throughout the network in an efficient manner.

**EP 2 323 339 A2**

## Description

### Field of the Invention

The present invention relates to the field of malware identification. More particularly, the invention relates to the detection of malware applications in a collaborative way in a communication network and the efficient and fault tolerant propagation of related information throughout the network.

### Background of the Invention

Operating systems of modern network devices, e.g. a smart phone, a PDA, a UMPC, etc., are becoming more and more popular, as well as increasingly susceptible to attacks originating from malicious applications, i.e. malwares. These malwares exhibit a variety of threats, stretching from data loss to forced advertising. Users' privacy and security can be compromised not only as a result of a hostile software, deliberately released as bait, but also by "innocent" applications, which might contain (sometimes unknowingly) vulnerabilities that can later be used by an attacker.

A variety of tools and methods designed to overcome such threats have been developed. Most current systems rely on a central service for identifying new threats and reporting them to the users as a periodic update. This approach is problematic; as such systems suffer from a single point of failure, i.e. those central servers, can be compromised by a focused attack, and are sometimes dependent on the user executing the periodic update.

In recent years, an alternative design approach, using the collective strength of network stations has been presented. Collaboratively, a large group of network stations can be shown to implement a method, proliferating information concerning malwares and propagating that information throughout the network. Using such a system, no single point of failure exists since both threats identification and the update mechanism are completely decentralized. Moreover, each network station increases its selfish defense utilization, e.g. fewer resources are allocated individually for the task of identifying a malware.

Information propagation in networks could be considered as flooding a network with messages intended for a large number of network stations [2], [3], [4]. This is arguably the simplest form of information dissemination in communication networks, especially when previous knowledge about the network topology is limited or unavailable. Since the basic problem of finding the minimum energy transmission scheme for broadcasting a set of messages in a given network is known to be NP-Complete, flooding optimization often relies on approximation algorithms. For example, in [5] and [8], messages are forwarded according to a set of predefined probabilistic rules, whereas [1] and [6] advocate deterministic algorithms. In [7], a deterministic algorithm which approximates the connected dominating set within a two-hop neighborhood of each network station in order to form a "backbone" of forwarding network stations is proposed. A complete review in the field of flooding techniques can be found in [9].

Information propagation concerning malwares in networks is measured by the actual ability of the system to successfully complete the information proliferation, minimize the number of messages sent in the system and minimize the completion time itself. The time of the completion is of course crucial, since one would like to immune network stations that are not yet infected, as well as remove the malware from the already infected network stations, and to do so as quickly as possible. The number of messages sent is also an important quality since one would like to minimize the energy exhausted in the system, e.g. the battery usage exhausted and the dedicated network bandwidth. However, none of the currently available methods for the proliferation of information concerning malwares can provide both low completion time as well as low number of messages to be sent throughout the network.

It is therefore an object of the present invention to reliably detect the existence of malwares on network stations.

It is another object of the present invention to prevent the propagation of malware in a network.

It is still another object of the present invention to quickly inform other network stations about the existence of a malware in the network, and doing so in an economical way in terms of the number of messages sent, the bandwidth used during the process and the resources allocated.

It is another object of the present invention to create a system that is fault tolerant to active adversarial attacks in the network.

It is still another object of the present invention to create a system that that is fault tolerant to passive adversarial attacks in the network, i.e. can adapt to the presence of "leeching" units that only draw information from the system and do not contribute to it

It is yet another object of the present invention to create a system for identification of malwares that will have no single point of failure.

Other objects and advantages of the invention will become apparent as the description proceeds.

## Summary of the Invention

The present invention presents a collaborative system for protecting against the propagation of malwares in a network, which comprising a plurality of network stations. Each station in the network comprises a detection module for locally scanning stations for possibly detecting a malware every T time units. Each station in the network also comprises an output unit and a list containing the values of parameters TTL, X, $\rho$ and T. The station further comprises first list for indicating safe applications, a second list indicating unclassified applications and a third list indicating malwares.

The network station also comprises a network unit adopted to send an alert message to X other network stations upon detection of a malware by the detection module. Each alert message comprises the ID of the detected malware, and a TTL value, wherein the TTL value indicates the number of times the alert message should be transmitted before it is discarded. Upon receipt of an alert message the detection module lists the malware ID identified in the alert message in the third list, and, if $\rho=1$, notifies the user through said output unit, or, if $\rho>1$, updates the number of alert messages received concerning the malware ID. The network unit than checks the number of alert messages concerning said malware ID that were received and notifies the user through the output unit if the number of alert messages exceeds $\rho>1$. For $\rho\geq1$, The network unit checks if value of the TTL included in the alert message as received at the station is greater than 0, and if so, sends an additional alert message from the station to one or more other stations. The additional alert message comprises said malware ID and a value of TTL decreased by 1 from the TTL included in the alert message as received at the station.

In one embodiment, the collaborative system may further comprise a server for updating the values of TTL, X, $\rho$ and T and sending the update to the station.

In an embodiment of the invention, the malware is deleted from the station automatically if more than p alert messages concerning said malware ID were received.

In an embodiment of the invention, the user is given an option to delete the malware from the station automatically if more than p alert messages concerning said malware ID were received.

In an embodiment of the invention, the malware ID identified in said the message is removed from the second list upon receipt of an alert message.

In an embodiment of the invention, each station stores the addresses of the X other network stations.

In an embodiment of the invention, the server stores the addresses of said X other network stations.

All the above and other characteristics and advantages of the invention will be further understood through the following illustrative and non-limitative description of embodiments thereof, with reference to the appended drawings.

## Brief Description of the Drawings

The above and other characteristics and advantages of the invention will be better understood through the following illustrative and non-limitative detailed description of preferred embodiments thereof, with reference to the appended drawings, wherein:

- Figure 1 schematically illustrates an exemplary communication network
- Figure 2 schematically illustrates a network station in the communication network
- Figure 3 schematically illustrates a propagation of messages in the network.

## Detailed Description of Preferred Embodiments

The present invention relates to a system for using a collective computing power of plurality network stations in a communication network in order to overcome threats generated by malicious applications. Collaboratively, a large group of simple network stations implement a vaccination mechanism, proliferating information concerning malicious applications (hereinafter "malwares") throughout the network in an efficient manner.

The following discussion refers to two different cases as follows:

a. A case where the stations of the network are fed from the electricity main, and in these cases there is no need for optimizing the electricity consumption of each station; and

b. A case where the stations of the network are mobile, while each station is fed from a corresponding battery. In these cases there is a need for optimizing the electricity consumption of each station;

As will be demonstrated hereinafter, the structure and operation of the stations in these two cases is similar, while they differ mainly by the value of the $\rho$ parameter, which will be discussed in detail hereinafter. More specifically, it will be demonstrated that for case (a) the value of $\rho > 1$ is appropriate, and for case (b) the value of $\rho=1$ is appropriate.

The following discussion, however, refers to the more general case, where the value of $\rho$ can have any value.

According to the present invention, malwares are identified by individual network stations using conventional detection methods. More specifically, each network station periodically performs independently a detection procedure for a specific application which is installed on the network station, in order to detect possible malware, and upon detection of such malware, the network station sends an alert message, with a predefined lifespan, informing such detection to a predefined number of other network stations. Each of the neighboring network stations continue to propagate said alert message to another neighboring network station until the lifespan of said alert message reaches an end. Moreover, each network station that receives the alert message, upon receipt of a predefined number of notifications concerning maliciousness of a given application, safely defines such application as malicious without having to locally perform by itself detection or analysis procedures relating to that specific application. A set of predefined parameters used to fine-tune and maximize efficiency of the method performed by the plurality of network stations is determined by a network operator and transmitted to each of the network stations. The system of the invention implements an efficient and secure propagation mechanism for distributing information between its network station members. As a result, the network stations are provided with a reliable monitoring service by harnessing the collective computing power of individual stations, thereby reducing the amount of time it takes to identify a specific malware, and the resource allocation for this task, in comparison to known malware identification techniques. Furthermore, since a plurality of network stations are utilized, no single point of failure exists, making the system more attack-tolerant. Moreover, the system of the invention reduces the time until a station is notified of new malware detection, thereby ensuring fast elimination of the propagation of the malware within the network stations.

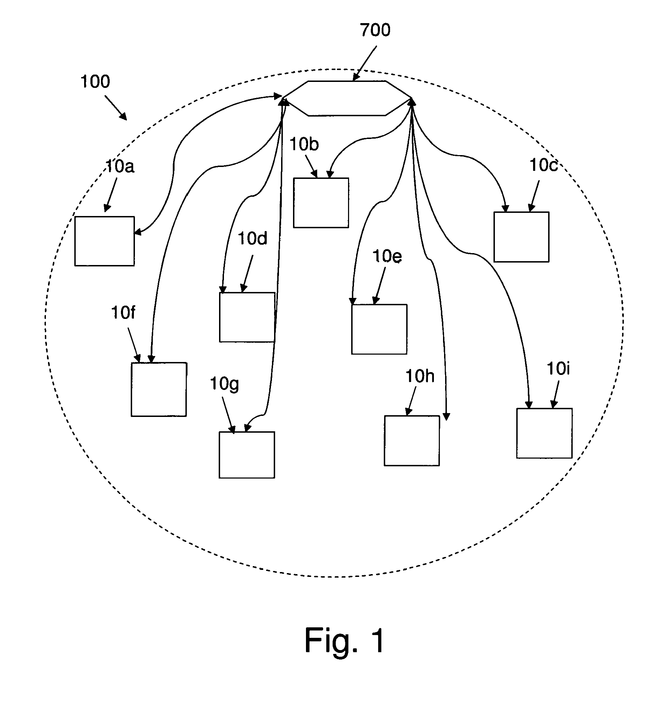

Figure 1 schematically illustrates network 100 (e.g. a PAN, a WAN, a LAN, etc.). This exemplary network is presented for the purpose of illustration, as real-life networks are much more complex. Network 100 comprise a large number of network stations, several of them are shown and illustrated as 10a to 10i, and main server 700. Network stations 10a to 10i are capable of sending short messages within network 100 among themselves using main server 700. In one embodiment of the invention, sending these messages is facilitated by a service layer situated in server 700, which receives a message to be sent from the sending network station, and randomly chooses a destination network station in the network. In another embodiment of the invention, each of the network stations manages a list of addresses of other network stations, and sends the messages through the service layer, which forwards the messages to the appropriate destinations.

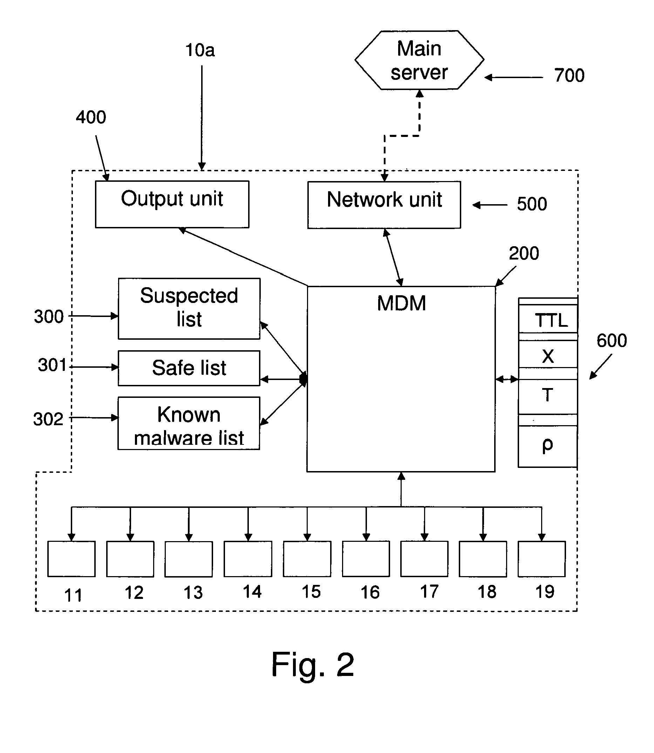

Figure 2 schematically illustrates the structure of exemplary network station 10a. A plurality of applications 11 to 19 are installed on network station 10a. Some or all of the same application, 11 to 19 or other, may be installed on several network stations. Each network station on network 100 can host several applications, but not more than a single instance of a same application.

According to the present invention, network station 10a comprises a malware detection module 200 (hereinafter MDM), which can be implemented in hardware, software, or a combination thereof. MDM 200 periodically inspects the applications installed on network station 10a and identifies malwares installed on said network station 10a using conventional detection techniques. However, since the detection process executed by MDM 200 is assumed to be rather expensive in terms of the network station energy source (e.g. a battery in a mobile device), resource allocations and CPU usage, it is therefore executed as few times as possible, as will be illustrated below.

It is well known that a specific application may be installed on a large number of network stations. Therefore, it is sufficient to have only a portion of the network stations identify a certain application as malicious. Consequently, alert messages are rapidly proliferated throughout the network, resulting in a low overall cost for the network, in terms of resources consumed and time until the information is propagated. According to the present invention, network station 10a also maintains 3 lists. Suspected applications list 300, which is a list of suspected applications, safe applications list 301 which is a list of applications known to be safe, and known malwares list 302 which is a list containing known malwares. To identify each application, the lists contain a unique ID for each application (e.g., an application signature, name, or any other data that will permit the unique identification of an application).

Network station 10a comprises a network unit 500, which is able to send and receive messages to/from main server 700 through network 100.

Network station 10a may also comprise an output device 400 for alerting a user on malware identification. This output device may be a display, a sound device, etc.

Network station 10a also comprises a parameters list 600, which holds parameters values that affect the function of MDM 200. The use of the various parameters will be detailed below.

Parameter list 600 comprises at least the following parameters :

- Parameter TTL, which represents TTL (Time To Live), i.e. the number of network stations, i.e. transmissions, a specific alert message experiences before it should be discarded.
- Parameter X, which represents the amount of alert messages generated and sent by a network station that monitors a selected application and finds it to be malicious.

• Parameter T, which represents the period of time that passes between the two consecutive monitoring processes executed by a specific network station.

• Parameter p, which represents the number of alert messages that originated from different network stations, received by a specific network station, indicating the maliciousness of a specific application, from which the application is considered as malware by that specific network station. When the stations of the network are mobile and each station is fed from a corresponding battery, there is a need for optimizing the electricity consumption of each station. Accordingly, in that specific case the present invention uses $\rho=1$.

According to the present invention, MDM 200 classifies an application as malicious if one or both of the following holds:

• MDM 200 has analyzed the application actually installed on the network station and found it to be malicious.

• MDM 200 has received more than a predefined number of alert messages, as indicated by parameter p, originating from different network stations on network 100 concerning the maliciousness of a specific application. An application can be defined by MDM 200 as malware while it is not necessarily installed on the network station of this MDM 200.

According to the invention, several ongoing repeated steps are performed in each of the network stations 10a to 10i by their respective MDM 200 in order to propagate information concerning malwares throughout network 100. Network station 10a is used as an exemplary network station to elaborate these steps. At the set up of network station 10a (e.g. when 10a is just added to network 100) all applications 11 to 19 which are installed on network station 10a are placed in suspected applications list 300. At this stage, safe applications list 301 and known malwares list 302 are empty.

Once MDM 200 encounters a new application (e.g., when trying to install a new application on network station 10a), it is compared to applications on known malwares list 302, and if found in that list, an alert is optionally sent by MDM 200 to the user via output device 400 (e.g. a message to a display, an alert sound, etc.). In another embodiment of the invention, the application is uninstalled automatically from network station 10a by MDM 200. If the new application is not found in known malwares list 302, the application is added to suspected applications list 300 by MDM 200.

MDM 200 periodically selects an arbitrary application which is installed on network station 10a, from suspected applications list 300, once every predefined period of time, as indicated by parameter T, and inspects that application. The selected application is monitored by MDM 200 by conventional methods, in order to detect whether it is malicious or not. In case that no malicious traces are found, the application is removed from suspected applications list 300 and is instead added to safe applications list 301. However, if the application is found to be malicious, it is removed from suspected applications list 300 by MDM 200 and added to known malwares list 302. Moreover, an alert is sent by MDM 200 to the user via output device 400. In an embodiment of the invention, the application is uninstalled automatically from network station 10a by MDM 200. Moreover, an alert message is produced by MDM 200 and sent to a predefined number of other network stations, as indicated by parameter p, using network unit 500 through main server 700. The alert message comprises a specific TTL (Time To Live) value, as indicated by parameter TTL, a unique station ID identifying the origin of the alert message (e.g. a network station IP address, a MAC address, etc.), and a unique application ID for the application identified as malware by MDM 200. Once a network station receives the alert message through its network device 500, MDM 200 of the receiving network station, checks if the application ID within the alert message is known to it, and acts accordingly (see below). It also decreases the TTL value of the received alert message by 1, and automatically forwards the alert message to one or more arbitrarily selected network stations, through its own network device 500. This propagation process of the alert message continues until the TTL value of the alert message reaches zero.

According to the invention, MDM 200 may also classify an application as malicious as a result of receiving alert messages concerning a specific application. It is noted that the classification process might be exposed to various attacks in the form of the proliferation of inaccurate information concerning the maliciousness of an application by Byzantine network stations. This may be the result of a deliberate attack, aimed at "framing" a benign application (either as a direct attack against a competitive application, or as a more general attempt for undermining the system's reliability altogether). In order to protect benign applications from being "framed", a network station classifies an application as malicious only after receipt of a predefined number of alerting messages concerning a specific application, as indicated by parameter $\rho$. Moreover, the alert messages must have originated from different network stations. For example, when an alert message concerning the maliciousness of a particular application, e.g. application 13, is received at network station 10a, MDM 200 of 10a forwards this message (assuming that the message TTL> 0) to a one or more arbitrarily selected network stations using network unit 500 through main server 700, while first decreasing the value of the message's TTL by 1, with the possibility that MDM 200 of station 10a has not yet classified application 13 as malicious. If the number of alert messages that originated from different network stations concerning application 13 received is lower than the value of parameter p, MDM 200 updates the corresponding value of messages received from different network stations concerning application 13. When p alert messages, that originated from different network stations, concerning application 13 are received, MDM 200 adds application 13 to known malwares list 302, removes it from suspected applications list 300 or from safe applications list 301 (if it exists in one of those lists), and an alert is optionally sent to the user via output device 400 (e.g. a message to a display, an alert sound etc.) by MDM 200. In another embodiment of the invention, application 13 is uninstalled automatically from network station 10a by MDM 200.

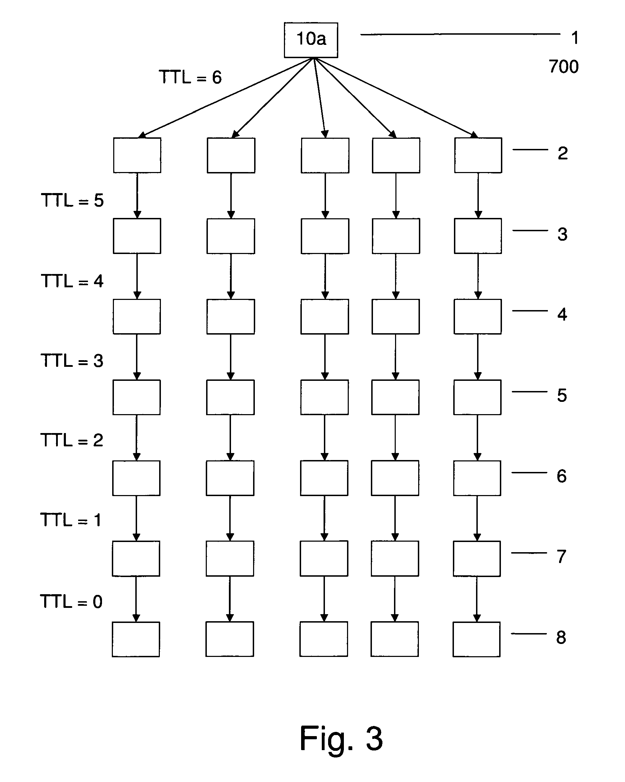

Figure 3 schematically illustrates 8 stages (number of stage are illustrated on the right of the figure) of the propagation of messages through a network. It is assumed that the parameters values are as follows: TTL=6, X=5 and T=4. It is assumed that in step 1, 4 time units have passed since network station 10a has monitored an application installed on it. Accordingly, network station 10a monitors application 13, and identifies it as malware. Network station 10a creates an alert message with TTL=6, and sends it within the network to 5 other network stations. In step 2, each of the network stations that received the alert message, sends said alert message with a TTL value of 5 to one other network station (in another embodiment of the invention each of the network stations can send the alert message to more than one station). This process continues in steps 2-7 until the TTL value reaches zero in step 8.

In an embodiment of the present invention, the values of the parameters list 600 (i.e. parameters TTL, X, T and ρ) can be determined by the network operator, and sent as a parameter update message from main server 700 to all the network stations in the network. For example, once the update message is transferred to network station 10a, MDM 200 updates parameter list 600 and the corresponding parameter values. In another embodiment of the invention the values of the parameters can be assigned by the end-user itself. Once new parameter values are established, MDM 200 acts accordingly.

Parameter assignment

It is clear that various thresholds and parameters used in the present invention, i.e. the values of the parameters in list 600, significantly affect the efficiency of the system, in terms of the actual ability of the system to successfully complete the information proliferation on malware detected, the number of messages sent in the system, the completion time of the information propagation itself, and the resources allocated for this task. Accordingly, there are clear trade-offs between said parameters and the efficiency, e.g. as the value of X increases, the number of alert messages sent in the network increases, however, the time it takes to propagate an alert message throughout the network decreases. A detailed analysis of the invention in terms of said tradeoffs and a presented method for deciding on optimized values for said parameters is detailed below.

Let $A = \{A_1, A2,...,Am\}$ denote the group of applications which can be installed onto the network devices. It is assumed that each application may be installed on several devices, and that each device can host several applications, but not more than a single instance of any application. The group of applications installed on a device $v$ is denoted by $A(v)$. For some application $A_i$, $p_{A_i}$ denotes the application's penetration probability, i.e. the probability that for some arbitrary device $v$, $A_i$ is installed on $v$ at the starting point of the process. Namely:

$$p_{A_i} = n^{-1} \left| \{v \quad s.t \quad A_i \in A(v)\} \right|$$

$N$ denotes the expected number of applications which are installed on a single unit, namely:

$$N = n^{-1} \sum_{v \in V} |A(v)|$$

It is assumed that some applications of $A$ may be malicious. As the presence of malwares installed on a network device compromises the network's security and reliability, the goal of the present invention is to prevent the expansion of such applications, i.e. being installed on other network stations. Formally, if $A_i$ is a malicious application, a requirement is made such that:

$$Prob(p_{A_i} > p_{MAX}) < \epsilon$$

for some $p_{MAX}$ of the network operator, and as small a value of $\epsilon$ as the network operator desires.

The use of parameter $p_{MAX}$ here is designed to direct the system's efforts towards threats of high penetration probabilities. The rational behind this notion is that the system should not waste resources on defense against minor threats, whose damage potential is likely to be smaller than this of a widespread virus. Furthermore, it is likely that a malware of low penetration probability can simply be bound to a small fragment of the network (for example, due to operating system's incompatibility).

The result of an application monitoring is a non-deterministic Boolean function: *M(x): A → {true; false}.*

False-positive and false-negative error rates of the monitoring process shall be denoted as follows:

$$P(M(A_i) = true \mid A_i \text{ is not malicious}) = E_+$$
$$P(M(A_i) = false \mid A_i \text{ is malicious}) = E_-$$

It is assumed that the MDM monitoring process is calibrated in such a way that $E_+$ is rather small.

In order to analyze the present invention's behavior, the movements of the notification messages between the network devices are modeled as random walking agents, traveling in a random graph *G(n,p)* (created by the random selection of the messages' destinations). Taking into account the fact that the messages have limited lifespan (i.e. *TTL,* hereinafter *"timeout'*), a relation between the size of the graph and the lifespan of the agents is produced. Once the value of *timeout* that guarantees coverage of the graph is determined, the completion time, as well overall number of messages sent, can then be calculated. In one embodiment of the present invention, the network operator can decide the completion time it desires, and extract the *timeout* that is needed.

While analyzing the correctness and performance of the present invention, a directed Erdos-Renyi random graph $G(V,E) \sim G(n,p_N)$ is considered, where $p_N=X/n$. The graph's vertices *V* denote the network's devices, and the graph's edges *E* represent messages forwarding connections between the devices, carried out during the execution of the present invention. Since *G* is a random graph, it can be used for the analysis of the performance of the present invention, although the message forwarding connections of the present invention are dynamic. A static selection of *X* neighbors of *v* in *G* is assumed, for the sake of analysis.

The agents have a limited life-span, equal to *timeout.* As the graph considered to represent the network is a random graph, the location of the devices onto which $A_i$ is installed is also considered random. Therefore, as they are the sources of the agents, it is assumed that the initial locations of the agents are uniformly and randomly spread along the vertices of *V* In compliance with the instruction of the present invention, the movement of the agents is done according to the random walk algorithm.

The expected number of new agents created at time *t*, denoted as $\hat{k}(t)$ is therefore:

$$\hat{k}(t) = \frac{n^2 \cdot p_{A_i} \cdot p_N}{T \cdot N}(1 - E_-)$$

and the accumulated number of agents which have been generated in a period of *t* time-steps is therefore:

$$k_t = \sum_{i \leq t} \hat{k}(i)$$

According to the invention, the value of *timeout* is selected in such a way that the complete coverage of the graph by (and therefore, its vaccination against $A_i$) is guaranteed (in probability greater than $1-\varepsilon$).

An artificial division of the mission completion time to two phases is done. In the first phase, the generation of the agents is examined, while in the second phase, the information propagation activity is discussed. This division ignores the activity of the agents created in the second phase. Furthermore, the fact that the agents are working on different times (and in fact, some agents may already vanish while others have not even been generated yet) is immaterial. The purpose of this technique is to ease the analysis of the flow of the vaccination process.

The completion time is denoted by $T_{Vaccination}$. Accordingly:

$$T_{Vaccination} \leq T_{Generation} + T_{Propagation}$$

Essentially $T_{Propagation}$= *timeout*. Now, a division is made so that:

$$\begin{cases} timeout & = & \lambda & \cdot & (T_{Generation} + timeout) \\ T_{Generation} & = & (1 - \lambda) & \cdot & (T_{Generation} + timeout) \end{cases}$$

Hence:

$$T_{Generation} = \frac{(1 - \lambda)}{\lambda} \cdot timeout$$

Later on, an upper bound for *timeout* will be demonstrated, based on the number of agents created in $t \le T_{Generation}$ (ignoring the activity of the agents created between $t = T_{Generation}$ and $t = T_{Generation} + timeout$).
The case of $\lambda = 0.5$ is now examined (This value can be shown to be optimal). For this case:

$$T_{Vaccination} \le 2 \cdot timeout$$

The number of agents created in the first $T_{Generation}$ time-steps is denoted by $k = k_{TGeneration}$. The time it takes those $k$ agents to completely cover the graph $G$ is then found, and from said time, the value of *timeout* is derived.
According to the present invention, a vertex (a network station) sends an alert message to a group of $X$ random network members when identifying an application as malicious. Even though in the random graph model there are vertices with a higher number of neighbors than $X$ (or alternatively, a lower number of neighbors), this model can still be used for the analysis purpose of the private case in which each vertex has exactly $X$ neighbors.
Since the bounds are probabilistic, the following "bad event" occurs with very low probability (e.g. $2^{\omega(n)}$): Event $E_{low-degree}$, defined as the existence of some vertex $v$ with $deg(v) < \frac{n \cdot p_N}{2}$. Using the *Chernoff* bound on $G$:

$$Prob[deg(v) < \frac{n \cdot p_N}{2}] < e^{-\frac{n \cdot p_N}{8}}$$

and applying union bound on all vertices:

$$Prob[E_{low\ degree}] < n \cdot e^{-\frac{n \cdot p_N}{8}} < 2^{-\omega(n)}$$

Similarly,

$$Prob[E_{high\ degree}] < 2^{-\omega(n)}.$$

From now on it is assumed that $E_{low\_degree}$ and $E_{high\_degree}$ do not hold, and all probabilities are conditioned over this assumption. In order to continue analyzing the execution process of the present invention it is shown that the locations of the notifications messages at any given time are purely random. According to the invention, the initial placement of the agents is random, their movement is random and the graph $G$ is random. As a result, the placement of the agents after each step is purely random over the vertices. Accordingly, the number of agents residing in adjacent vertices from some vertex $v$ can be produced:

Lemma 1: Let $v \in V$ be an arbitrary vertex of $G$. Let $N_1(v, t)$ be the number of agents which reside on one of *Neighhor (v)* (adjacent vertices to $v$) after step t. Then:

$$\forall t \geq 0 : E[N_1(v,t)] \geq \frac{p_N \cdot k}{2}$$

In other words, the expected number of agents who reside within distance 1 from $v$ after every step is at least $\frac{p_N \cdot k}{2}$.

Proof: Upon the above assumption, in $G(n,pN)$ the number of incoming neighbors for some vertex $v$ is at least $1/2p_N n$. In addition, for every $u \in V(G)$, *Prob[some agent resides on u] = kln*. In addition, for every $u \in V$ such that $(u, v) \in E$ it is also known that $deg(u) \leq 3/2_{PN}.n$. Combining the above together produces:

$$\forall t \geq 0 : E[N_1(v,t)] \geq \frac{p_N \cdot n \cdot k}{2n} \geq \frac{1}{2}p_N \cdot k.$$

**Lemma 2**: For any *vertex $v \in V$,* the probability of v being notified at the next time-step that $A_i$ is malicious is at least $1 - e^{-\frac{k}{2n}}$.

Proof : For some agent located on a vertex $u$, such that $(u, v) \in E$, the probability that it will move to $v$ at the next time-step is $1/_{PN} \cdot n$. The number of agents that are located in adjacent vertices to $v$ is $1/2p_N \cdot k$. Therefore, the probability that v will not be reported about $A_i$ at the next time-step is $\left(1 - \frac{1}{p_N \cdot n}\right)^{\frac{1}{2}p_N \cdot k}$. Using the well known inequality $(1-x) < e^x$ for $x < 1$, the probability from above is bounded by:

$$\left(e^{-\frac{1}{p_N \cdot n}}\right)^{\frac{1}{2}p_N \cdot k} \leq e^{-\frac{k}{2n}}$$

Therefore, the probability that v will be notified on the next time-step is at least $1 - e^{-\frac{k}{2n}}$.

Interestingly, this fact holds for any positive $p_N$ (the density parameter of $G$). $p_N \neq 0$ is essential, since a division by $p_N \cdot n$ is made in the above proof.

Denote by $\rho$-coverage of a graph the process that results in that every vertex in the graph was visited by some agent at least p times.

**Theorem 1**: The time it takes $k$ random walkers to complete a $\rho$- coverage of Gin probability greater than $1-\varepsilon$ is:

$$T(n) \geq \frac{2\left(\rho - \ln \frac{\epsilon}{n}\right)}{1 - e^{-\frac{k}{2n}}}$$

Proof Lemma 2 states the probability that some *vertex $v \in V$* will be reported of $A_i$ at the next time-step. This is in fact a Bernoulli trial with:

$$p_{success} = 1 - e^{-\frac{k}{2n}}$$

A bound for the probability of failing this trial (not notifying vertex *v* enough times) after m steps is established. Let $X_v(m)$ denote the number of times that a notification message had arrived to *v* after m steps, and let $F_v(m)$ denote the event that v was not notified enough times after *m* steps (i.e. $X_v(m) < \rho$). Denote by $F(m)$ the event that one of the vertices of *G* where not notified enough times after m steps, i.e. $U_{\upsilon \in V(G)}\ F_\upsilon(m)$. The Chernoff bound is used:

$$P[X_v(m) < (1 - \delta)p_{success}m] < e^{-\delta^2 \frac{mp_{success}}{2}}$$

in which $\delta = 1 - \dfrac{\rho}{mp_{success}}$ such that:

$$P[X_v(m) < \rho] < e^{-(1 - \frac{\rho}{mp_{success}})^2 \frac{mp_{success}}{2}}$$

Namely:

$$P[F_v(m)] < e^{\rho - \frac{mp_{success}}{2}}$$

This bound is strong enough for applying the union bound:

$$P[e_1 \cup e_2 \cup \ldots \cup e_n] \le P[e_1] + P[e_2] + \ldots + P[e_n]$$

on all n vertices of G. Therefore the probability of failure on any vertex *v* (using Lemma 2) is bounded as follows:

$$Pr[F(m)] \le ne^{\rho - \frac{mp_{success}}{2}} \le ne^{\rho - \frac{m(1 - e^{-\frac{k}{2n}})}{2}} \le \epsilon$$

A corollary of this is that:

$$T(n) \triangleq m \ge \frac{2\left(\rho - \ln \frac{\epsilon}{n}\right)}{1 - e^{-\frac{k}{2n}}}$$

A way to select a value of *timeout* that guarantees a successful vaccination process is shown next:
**Theorem 2**: In order for the present invention to guarantee a successful vaccination process for some critical penetration $p_{MAX}$ in probability greater than *1-ε*, the value of *timeout* should satisfy the following expression:

$$\frac{2\left(\rho - \ln \frac{\epsilon}{n}\right)}{timeout(1 - e^{-timeout \cdot \frac{n \cdot p_{MAX} \cdot p_N}{2T \cdot N}(1 - E_-)})} = 1$$

Proof: Notice the number of agents, k, appears in the expression of Theorem 1:

$$k = \sum_{i \leq T_{Generation}} \frac{n^2 \cdot p_{A_i} \cdot p_N}{T \cdot N}(1 - E_-)$$

The goal of the vaccination process is to decrease the penetration probability of $A_i$ below the threshold $p_{MAX}$ · n. Until the process is completed, an assumption that this probability never decreases below $p_{MAX}$ is made. Namely, that:

$$\forall t < T_{Generation} : p_{A_i} \geq p_{MAX}$$

Therefore, the number of agents is bound from below:

$$k \geq timeout \cdot \frac{n^2 \cdot p_{MAX} \cdot p_N}{T \cdot N}(1 - E_-)$$

In order to guarantee successful completion, *timeout = m* is used, and therefore:

$$timeout = \frac{2(\rho - \ln \frac{\epsilon}{n})}{1 - e^{-\frac{k}{2n}}} \leq \frac{2\left(\rho - \ln \frac{\epsilon}{n}\right)}{1 - e^{-\frac{n \cdot p_{MAX} \cdot p_N}{2T \cdot N \cdot timeout^{-1}}(1 - E_-)}}$$

and the rest is implied.

Number of Messages and Time Required for Vaccination

It is noted that from the value of *timeout* stated in Theorem 2, the vaccination time $T_{Vaccination}$ as well as the overall number of messages can be extracted.
**Observation 1:** For any *timeout = τ* which satisfies Theorem 2, the present invention time and cost can be expressed as:

$$T_{Vaccination} = O(\tau) \quad , \quad M = O(k \cdot \tau + \frac{k}{X}C) =$$

$$O\left(\frac{p_{MAX} \cdot p_N}{n^{-2}T \cdot N} \cdot (1 - E_-) \cdot \left(\tau^2 + \frac{n^{-1}\tau \cdot C}{p_N}\right)\right)$$

An assumption that ε is polynomial in *1/n* is made, namely:

$$\epsilon = n^{-\alpha} \quad s.t. \quad \alpha \in \mathbb{Z}^+$$

Using the bound *(1 - x) < e⁻ˣ* for *x < 1* when assuming that:

$$timeout \cdot \frac{n \cdot p_{MAX} \cdot p_N}{2T \cdot N}(1 - E_-) < 1$$

Theorem 2 can be written as:

$$\rho + (\alpha + 1)\ln n \geq timeout^2 \cdot \frac{n \cdot p_{MAX} \cdot p_N}{4T \cdot N \cdot (1 - E_-)^{-1}}$$

and therefore:

$$timeout \leq \sqrt{\frac{4T \cdot N(\rho + (\alpha + 1)\ln n)}{n \cdot p_{MAX} \cdot p_N \cdot (1 - E_-)}}$$

One can find the lowest positive value of *timeout,* for which the above formula is satisfied. In one embodiment of the invention said timeout value (corresponding to parameter TTL in parameter list 600 in Figure 2) is transmitted by the network operator to all network stations. Accordingly, the network stations update their parameter list.
The processes' completion time and cost is calculated:
**Theorem 3:** Completion time of the present invention is:

$$T_{Vaccination} \leq 4\sqrt{\frac{T \cdot N(\rho + (\alpha + 1)\ln n)}{n \cdot p_{MAX} \cdot p_N \cdot (1 - E_-)}}$$

When the vaccination process is completed, no new messages concerning the malicious application are sent, and therefore the overall number of messages sent is as follows:
**Theorem 4:** The overall cost of the present invention (messages sent and monitoring) is:

$$M \leq k \cdot timeout + \frac{k}{X} \cdot C \leq$$

$$\leq 4n(\rho + (\alpha + 1)\ln n) + 2C\sqrt{\frac{n(\rho + (\alpha + 1)\ln n) \cdot p_{MAX}}{p_N \cdot T \cdot N(1 - E_-)^{-1}}}$$

**Observation 2:** Theorems 3 and 4 are valid only when:

$$p_N < \frac{T \cdot N}{n \cdot p_{MAX} \cdot (\rho + (\alpha + 1)\ln n)(1 - E_-)}$$

Proof: The approximations contained in the Theorems above hold only when *timeout* $\cdot \frac{n \cdot p_{MAX} \cdot p_N}{2T \cdot N}(1 - E_-) < 1.$ Combining with the explicit approximated expression for *timeout,* the constraint for the validity could be produced:

$$\sqrt{\frac{2T \cdot N}{n \cdot p_{MAX} \cdot p_N(1 - E_-)} \cdot 2\left(\rho + (\alpha + 1)\ln n\right)} <$$

$$< \frac{2T \cdot N}{n \cdot p_{MAX} \cdot p_N(1 - E_-)}$$

and the rest of the proof is implied.

Taking Observation 2 as an upper bound for $p_N$ and $ln(n)/n$ as a lower bound for $p_N$ which guarantees connectivity [10], the following corollaries can now be produced:

**Corollary 1:** The completion time of the present invention is:

$$T_{Vaccination} = O\left(\rho + \log n + \frac{T \cdot N(1 - E_-)^{-1}}{p_{MAX} \cdot \log n}\right)$$

Proof Assigning the upper bound for $p_N$ into Theorem 3 immediately yields $O(\rho + log\ n)$. When assigning the lower bound of $p_N = ln(n)/n$ the following expression is received :

$$T_{Vaccination} \leq 4\sqrt{\frac{T \cdot N \cdot (\rho + (\alpha + 1)\ln n)}{\ln(n) \cdot p_{MAX}(1 - E_-)}}$$

However, using Observation 2 implies:

$$\frac{\ln n}{n} < \frac{T \cdot N}{n \cdot p_{MAX} \cdot (\rho + (\alpha + 1)\ln n)(1 - E_-)}$$

which in turn implies that:

$$(\rho + (\alpha + 1))\ln n < \frac{T \cdot N}{\ln(n) \cdot p_{MAX}(1 - E_-)}$$

Combining the two yields:

$$T_{Vaccination} = O\left(\frac{T \cdot N}{\ln n \cdot p_{MAX} \cdot (1 - E_-)}\right)$$

It is noted that although $O\left(\frac{T \cdot N}{p_{MAX}}\right)$ is allegedly independent of *n,* we can see nevertheless that

$$\frac{T \cdot N}{p_{MAX}} = \Omega(\log^2 n).$$

For similar arguments, the vaccination's cost can be approximated as:

**Corollary 2:** The overall cost of our present invention (messages sent + monitoring) is:

$$M = O\left(k \cdot timeout + \frac{k}{X} \cdot C\right) =$$

$$O\left(n\rho + n\ln n + C\frac{n}{\ln n} + Cn(1 - E_-)(\rho + \ln n)\frac{p_{MAX}}{T \cdot N}\right)$$

In networks where $E_- < 1 - 0(1)$, provided that $\rho = O(1)$, and remembering that

$$\frac{T \cdot N}{p_{MAX}} = \Omega(\log^2 n) \quad,$$ the dominant components of Corollary 2 are as follows :

$$M = O\left(n\ln n + C\frac{n}{\ln n}\right)$$

Vaccination in General Graphs

In an embodiment of the present invention, the forwarding of notification messages between the vertices is not assumed to be done using a random scheme. For example, an adversary is controlling the "random selection" of network members, so that this selection does not reflect a random graph. In this case, the abovementioned method can still be used (with a higher value of TTL). However, the analysis of its performance will need to be revised, and the parameter assignment procedure as well. In order to do so, following upper bound concerning the exploration of a general graph using a decentralized group of k random walkers is used [111]:

$$E(ex_G) = O\left(\frac{|E|^2 log^3 n}{k^2}\right)$$

It is noted that the coverage time of random walkers in graphs is also upper bounded by $\frac{4}{27}n^3 + o(n^3)$ [12]. However, an assumption that $p_N < O(n^{-(0.5+\varepsilon)})$ is made, (for some $\varepsilon > 0$), using the bound of [11] gives tighter results.

Substituting the result of Theorem 1 with the above, a revised version of Theorem 2 can now be obtained:

**Theorem 5:** In order for the present invention to guarantee a successful vaccination process for some critical penetration $p_{MAX}$, the value of timeout should be as follows:

$$timeout = O\left(\rho \cdot \sqrt[3]{\frac{T^2 \cdot N^2}{p_{MAX}^2 \cdot (1 - E_-)}} \cdot n^{\frac{2}{3}} \cdot log(n)\right)$$

From the above, the time complexity and overall cost of revised model are derived, allowing the network operator to estimate the various parameters, and transmit them to the plurality of network stations accordingly.

Avoiding benign applications "frame" through adversarial use of the present invention

Let us denote by $P_{Attack}(timeout, \rho, k, \varepsilon)$ *the* probability that a "framing attack" done by a group of *k* organized adversaries will successfully convince at least $\varepsilon \cdot n$ of the network's units that some benign application $A_i$ is malicious.

**Theorem 6:** The probability that k attackers will be able to make at least an $\varepsilon$ portion of the network's units treat (benign) application $A_i$ as a malicious application, and using *TTL* of *timeout* and threshold $\rho$ is:

$$P_{Attack}(timeout, \rho, k, \varepsilon) \leq 1 - \phi\left(\sqrt{n} \cdot \frac{\varepsilon - \tilde{P}}{\sqrt{\tilde{P}(1-\tilde{P})}}\right)$$

where:

$$\tilde{P} = e^{(\rho - timeout \cdot (1 - e^{-\frac{k \cdot p_N}{2}}))} \cdot \left(\frac{timeout \cdot (1 - e^{-\frac{k \cdot p_N}{2}})}{\rho}\right)^{\rho}$$

Proof Lemma 2 is used to calculate the probability that *unit $v \in V$* will be reported of $A_i$ by a message sent by one of the *k* adversaries at the next time-step (a Bernoulli trial):

$$p_s = 1 - e^{-\frac{k}{2n}}$$

Denoting as $X_v(t)$ the number of times a notification message had arrived at v after t steps, using the Chernoff bound:

$$P[X_v(t) > (1+\delta)t \cdot p_s] < \left(\frac{e^{\delta}}{(1+\delta)^{(1+\delta)}}\right)^{t \cdot p_s}$$

in which $\delta = \frac{\rho}{t \cdot p_s} - 1.$ Accordingly:

$$\tilde{P} \triangleq P_{Attack}(timeout, \rho, k, n^{-1}) = P[X_v(timeout) > \rho] <$$
$$e^{(\rho - timeout \cdot p_s)} \cdot \left(\frac{timeout \cdot p_s}{\rho}\right)^{\rho}$$

In order to bound the probability that at least $\varepsilon \cdot n$ of the units are deceived, the above probability is used as a second Bernoulli as a success probability. As n is large, the number of deceived units can be approximated using normal distribution, as follows:

$$P_{Attack}(timeout, \rho, k, \varepsilon) \leq 1 - \phi\left(\frac{\varepsilon \cdot n - n \cdot \tilde{P}}{\sqrt{n \cdot \tilde{P}(1-\tilde{P})}}\right)$$

and the rest of the proof is implied.

According to one embodiment of the invention, the network operator estimates the number of adversaries, k, determines a satisfying ε value, and according to Theorem 6, an optimal value of ρ can be derived. This value is sent as a parameter update message to the network stations.

Coping with leeching and a passive muting attack

Collaborative systems, by their nature, are based on the fact that the participants are expected to contribute some of their resources. However, what happens when users decide to benefit from the system's advantages without providing the contribution that is expected from them ? This behavior, known as leeching is frequent in many Peer-to-Peer data distribution systems, in which users often utilize the system for data download, without allocating enough upload bandwidth in return.

A similar behavior can also be the result of a deliberate attack on the system, e.g. a muting attack. In this attack, one or more participants of the system block all the messages that are sent to them (e.g. automatically decrease the TTL of the messages to zero). In addition, no original messages are sent by these participants. The purpose of this attack is to compromise the correctness of the vaccination process, which relies on the paths messages of a given TTL value are expected to perform.

Either performed as a way of evading the need to allocate resources for the collective use of the network, or maliciously as an adversarial use of the system, this behavior might have a significant negative influence on the performance of the vaccination process. The operators of the network therefore need to have a way of calibrating the system so that it will overcome disturbances caused by any given number of participants who select to adopt this behavior.

It will be shown that in terms of completion time the present invention is fault tolerant to the presence of blocking units up to a certain limit. More precisely, the expected vaccination time is unchanged as long as (Corollary 6 as will be shown):

$$p_{mute} \ll \frac{1}{\rho \ln n}$$

As will be shown, for higher values of $p_{mute}$ Theorem 7 presents an analytic upper bound for the present invention expected completion time. For extremely high values of $p_{mute}$ the completion time of the present invention will be shown in Corollary 7 to be bounded as follows:

$$\frac{\frac{1}{4}p_{mute}}{1 - p_{mute}} \cdot T_{Vac}^2$$

As to the overall cost of the present invention, it will be shown in Corollary 8 to remain completely unaffected by the presence of blocking units, regardless of their number, namely:

$$\forall p_{mute} < 1 \quad , \quad M(n, p_{mute}) = M(n, 0)$$

Completion Time: $p_{mute}$ denotes the probability that a given network station may decide to stop generating vaccination messages and block some or all of the messages that are received by it. T(n, $p_{mute}$) denotes the vaccination time of a network of n units, with a probability of $p_{mute}$ to block messages. Theorem 2 can now be revised in the following way:

Theorem 7: The vaccination completion time of the present invention for some critical penetration $p_{MAX}$ in probability greater than 1 - ε, while at most n · $p_{mute}$ units may block messages forwarding and generation, is:

$$T(n, p_{mute}) = \frac{2(\rho - \ln \frac{\epsilon}{n})}{1 - e^{-\frac{1 - p_{mute} - e^{-timeout \cdot p_{mute}}}{p_{mute}} \cdot \frac{n \cdot p_{MAX} \cdot PN}{2T \cdot N \cdot (1 - E_-)^{-1}}}}$$

while for the calculation of timeout we can use the expressions that appear in Theorem 2 or Theorem 3.

Proof : The expected number of new messages created at time t, $\hat{k}(t)$ is expected to be:

$$\hat{k}(t) = (1 - p_{mute}) \frac{n^2 \cdot p_{A_i} \cdot p_N}{T \cdot N} (1 - E_-)$$

Given a message created with a TTL of timeout, at every time step it has a probability of $p_{mute}$ to be sent to a network node which will not forward it onwards. Therefore, given a group of m messages, created at time t. Then at time t + i (for every i < timeout), only $(1- p_{mute})^i \cdot m$ messages would remain alive. The average number of messages at any time step between t and t + timeout is therefore:

$$m \frac{1 - (1 - p_{mute})^{timeout}}{timeout \cdot p_{mute}}$$

As we assume that $\forall t < T_{Vaccination}\ p_{Ai} \geq p_{MAX}$, the number of agents k would be at least:

$$\frac{1 - p_{mute} - (1 - p_{mute})^{timeout+1}}{p_{mute}} \cdot \frac{n^2 \cdot p_{MAX} \cdot p_N}{T \cdot N} (1 - E_-)$$

Using again the fact that $\forall x < 1\ (1 - x) < e^{-x}$, we can see that:

$$k > \frac{1 - p_{mute} - e^{-timeout \cdot p_{mute}}}{p_{mute}} \cdot \frac{n^2 \cdot p_{MAX} \cdot p_N}{T \cdot N} (1 - E_-)$$

Recalling Theorem 1:

$$T(n, 0) = \frac{2(\rho - \ln \frac{\epsilon}{n})}{1 - e^{-\frac{k}{2n}}}$$

and assigning the revised expression for k, the rest of the proof is implied.

The behavior of the expression above for various values of

$$r_{mute} = p_{mute} \cdot timeout$$

will be observed. There are three complementary cases:

- $r_{mute} \ll 1$
- $r_{mute} \gg 1$
- $r_{mute} \approx 1$

It is easy to see that when $r_{mute} \ll 1$, the decay of the number of messages is negligible, i.e.:

$$\frac{1 - p_{mute} - e^{-timeout \cdot p_{mute}}}{p_{mute}} \approx timeout$$

As a result, Theorem 7 can be approximated by Theorem 2. Subsequently, the Theorems and Corollaries that are derived from Theorem 2 would hold, and specifically - Corollary 1, according to which:

$$p_{mute} \ll \frac{1}{O\left(\rho \log n\right)}$$

Based on the above, the fault tolerance of the present invention is stated, with respect to the muting attack:

Corollary 6: the present invention is fault tolerant with respect to the presence of $c \cdot O\left(\frac{n}{\rho \ln n}\right)$ mute network units (for some c << 1). Namely:

$$T(n, p_{mute}) \approx T(n, 0)$$

The case where $r_{mute}$ << 1 is now observed. In this case, most of the messages are likely to be blocked before completing their TTL-long path. This results in an increased vaccination time, as shown in the following Corollary:

Corollary 7: When the number of blocking units is greater than $c \cdot O\left(\frac{n}{\rho \ln n}\right)$ (for some c >> 1), the completion time of the present invention is affected as follows:

$$T(n, p_{mute}) \leq \frac{\frac{1}{4}p_{mute}}{1 - p_{mute}} \cdot T(n, 0)^2$$

Proof When $r_{mute}$ >> 1 Theorem 7 converges as follows:

Observation 4: When $p_{mute}$ >> 1/timeout, the vaccination time of the present invention is:

$$T(n, p_{mute}) = \frac{2(\rho - \ln \frac{\epsilon}{n})}{1 - e^{-\frac{1 - p_{mute}}{p_{mute}} \cdot \frac{n \cdot P_{MAX} \cdot P_N}{2T \cdot N}(1 - E_-)}}$$

Assuming again that:

$$\epsilon = n^{-\alpha} \quad s.t. \quad \alpha \in \mathbb{Z}^+$$

then provided that:

$$\frac{1 - p_{mute}}{p_{mute}} \cdot \frac{n \cdot p_{MAX} \cdot p_N}{2T \cdot N}(1 - E_-) < 1$$

can be seen that:

$$T(n, p_{mute}) = \frac{4N \cdot T \cdot p_{mute}(\rho + (\alpha + 1)\ln n)}{(1 - p_{mute}) \cdot n \cdot p_{MAX} \cdot p_N(1 - E_-)}$$

Using Theorem 3, a calculation of $\Delta_{pmute}$, denoting the increase in the vaccination time as a result of the presence of the blocking nodes, is made:

$$\Delta_{pmute} = \frac{T(n, p_{mute})}{T(n, 0)} = \frac{\frac{4N \cdot T \cdot p_{mute}(\rho + (\alpha + 1)\ln n)}{(1 - p_{mute}) \cdot n \cdot p_{MAX} \cdot p_N(1 - E_-)}}{4\sqrt{\frac{T \cdot N(\rho + (\alpha + 1)\ln n)}{n \cdot p_{MAX} \cdot p_N \cdot (1 - E_-)}}}$$

and after some arithmetic manipulation:

$$\Delta_{pmute} = \frac{T(n, p_{mute})}{T(n, 0)} = \frac{\frac{1}{4}p_{mute}}{1 - p_{mute}} \cdot T(n, 0)$$

For every other value of $r_{mute}$ which revolves around 1, the expected vaccination time would move between T

(n, 0) and $\dfrac{\frac{1}{4}p_{mute}}{1 - p_{mute}} \cdot T(n, 0)^2$ (more details concerning the monotonic nature of T(n,$p_{mute}$) will be

given in the proof of Corollary 8 below).

Cost of the present invention: The affect blocking units may have on the number of messages sent throughout the execution of the process is now examined. Denote by M(n, $p_{mute}$) the overall cost of the present invention (messages sent + monitoring) for a network of n units, with a probability of $p_{mute}$ to block messages. As shown in the following Corollary, the overall cost of the vaccination process remains unaffected by the presence of any given number of blocking units.

Corollary 8: The overall cost of the present invention is unaffected by the presence of blocking units. i.e.:

$$\forall p_{mute} < 1 \quad, \quad M(n, p_{mute}) = M(n, 0)$$

Proof It was shown before (Corollary 6) that when the number of blocking units is smaller than $c \cdot O\left(\dfrac{n}{\rho \ln n}\right)$

(for some c <<1), the system is approximately unaffected by the blocking units. Therefore:

$$M(n, p_{mute}) \approx M(n, 0)$$

Interestingly, this is also the case when the number of blocking units is far greater. Recalling corollary Corollary 2, the cost of the process when no blocking units are present is:

$$M(n, 0) = O\left(k \cdot T(n, 0) + \frac{k}{n \cdot p_N} \cdot C\right)$$

Denoting by $k(n, p_{mute})$ the expected number of active agents at each time step, it was shown in the proof of Theorem 7 that for large values of $p_{mute}$:

$$k_{(n, p_{mute})} \approx \frac{1 - p_{mute}}{p_{mute}} \cdot T(n, 0)^{-1} \cdot k_{(n, 0)}$$

The overall cost of the process when a large number of blocking units are present is:

$$M(n, p_{mute}) = O\left(k_{(n, p_{mute})} \cdot T(n, p_{mute}) + \frac{k_{(n, p_{mute})}}{n \cdot p_N} C\right)$$

Assigning the values of $k(n, p_{mute})$ and $T(n, p_{mute})$:

$$M(n, p_{mute}) = O\left(k_{(n, 0)} \cdot T(n, 0) + \frac{\frac{1 - p_{mute}}{p_{mute}} \cdot k_{(n, 0)}}{T(n, 0) \cdot n \cdot p_N} C\right)$$

As it assumed that:

$$p_{mute} \gg \frac{1}{\rho \ln n}$$

Accordingly:

$$\frac{1 - p_{mute}}{p_{mute}} \ll \frac{1 - \frac{1}{\rho \ln n}}{\frac{1}{\rho \ln n}} \ll \rho \ln n - 1$$

Using this, the expression for the overall cost of the process is as follows:

$$M(n, p_{mute}) = O\left(k_{(n,0)} \cdot T(n, 0) + \frac{\rho \ln n \cdot k_{(n,0)}}{T(n, 0) \cdot n \cdot p_N}C\right)$$

and as $T(n, 0) = \Omega(\ln n)$, we get the requested result of:

$$M(n, p_{mute}) = O\left(k_{(n,0)} \cdot T(n, 0) + \frac{k_{(n,0)}}{n \cdot p_N}C\right) = M(n, 0)$$

It has been shown that $M(n, p_{mute}) = M(n, 0)$ for $p_{mute}$ << 1/ timeout and well as for $p_{mute}$ >> 1/timeout. An upper bound for the overall cost of the process for values of $p_{mute}$ which are close to 1/timeout will now be established. For this, the value of $p_{mute}$ which maximizes $M(n, p_{mute})$ is found:

$$\frac{\partial M(n, p)}{\partial p} = \frac{\partial k_{(n,p)}}{\partial p}T(n, p) + \frac{\partial T(n, p)}{\partial p}k_{(n,p)} + \frac{\partial k_{(n,p)}}{\partial p}\frac{C}{n \cdot p_N}$$

and according to Theorem 7:

$$k > \frac{1 - p_{mute} - e^{-timeout \cdot p_{mute}}}{p_{mute}} \cdot \frac{n^2 \cdot p_{MAX} \cdot p_N}{T \cdot N}(1 - E_-)$$

hence,

$$\frac{\partial k_{(n,p)}}{\partial p} = \frac{(p \cdot timeout + 1) \cdot e^{-timeout \cdot p} - 1}{p^2} \cdot \alpha$$

where:

$$\alpha = \frac{n^2 \cdot p_{MAX} \cdot p_N}{T \cdot N}(1 - E_-)$$

Therefore:

$$\forall p > 0 \quad , \quad \frac{\partial k_{(n,p)}}{\partial p} < 0$$

and the number of agents is monotonously decreasing.
Examining the behavior of the cleaning time:

$$\frac{\partial T(n,p)}{\partial p} = -\frac{\partial k_{(n,p)}}{\partial p} \cdot \frac{2e^{-\frac{1-p-e^{-timeout \cdot p}}{p} \cdot \beta}}{n(1 - e^{-\frac{1-p-e^{-timeout \cdot p}}{p} \cdot \beta})^2}$$

where:

$$\beta = \frac{n \cdot p_{MAX} \cdot p_N}{2T \cdot N \cdot (1 - E_-)^{-1}}$$

Using the observation concerning $\frac{\partial k_{(n,p)}}{\partial p}$ :

$$\forall p > 0 \quad , \quad \frac{\partial T(n,p)}{\partial p} > 0$$

and the cleaning time is monotonously increasing.

Returning to the derivative of the overall price function, a division into two components is made. The first component representing the number of messages sent during the process while the second representing the monitoring activities of the units:

$$\frac{\partial M(n,p)}{\partial p} = M_1(p) + M_2(p)$$

Where:

$$M_1(p) = \frac{\partial k_{(n,p)}}{\partial p} T(n,p) + \frac{\partial T(n,p)}{\partial p} k_{(n,p)}$$

and:

$$M_2(p) = \frac{\partial k_{(n,p)}}{\partial p} \frac{1}{n \cdot p_N} \cdot C$$

As k(n,p) is monotonously decreasing, the cost of the present invention due to monitoring activities, represented by $M_2(p)$, would be maximized when $p_{mute} = 0$ (for which we have already shown that M(n,p) = M(n, 0)).
As to $M_1(p)$, it can be written as:

$$M_1(p) = \frac{\partial k_{(n,p)}}{\partial p} \left( T(n,p) - \frac{e^{-\beta \cdot x_p}}{(1 - e^{-\beta \cdot x_p})^2} \cdot x_p \cdot \beta \right)$$

where:

$$\beta = \frac{n \cdot p_{MAX} \cdot p_N}{2T \cdot N \cdot (1 - E_-)^{-1}}$$

and:

$$x_p = \frac{1 - p - e^{-timeout \cdot p}}{p}$$

Studying this function reveals that it has a single minimum point, while $M_1(0) = 0$ and $M_1(1) \to \infty$. This means that the maximal values of $M(n, p_{mute})$ are received either at $p_{mute} = 0$ or at $p_{mute} = 1$. It was shown that at these points the overall cost of the process remains unchanged, it is concluded that the overall cost of the process at any point between these values of $p_{mute}$ is also bounded by $M(n,0)$.

The above examples and description have been provided only for the purpose of illustration, and are not intended to limit the invention in any way. As will be appreciated by the skilled person, the invention can be carried out in a great variety of ways, employing more than one technique from those described above, all without exceeding the scope of the claims.

References:

[1] K. Alzoubi, P.J. Wan, and O. Frieder, New distributed algorithm for connected dominating set in wireless ad-hoc networks, Proceedings of HICSS, 2002.

[2] F. Chung and L. Lu, The diameter of sparse random graphs, Advances in Applied Mathematics 26 (2001), 257-279.

[3] S. Crisostomo, J. Barros, and C. Bettstetter, Flooding the network: Multipoint relays versus network coding, 4th IEEE International Conference on Circuits and Systems for Communications (ICCSC), 2008, pp.119-124.

[4] P. Erdos and A. Renyi, On random graphs, Publ. Math. Debrecen 6 (1959), 290-291.

[5] Z. Haas, J. Halpern, and L. Li, Gossip-based ad-hoc routing, IEEE/ACM Transactions of networks 14 (2006), no. 3, 479-491.

[6] W. Lou and J. Wu, On reducing broadcast redundancy in ad-hoc wireless networks, IEEE Transactions on Mobile Computing 1 (2002), no. 2,111-123.

[7] L.V.A. Qayyum and A. Laouiti, Multipoint relaying for flooding broadcast messages in mobile wireless networks, Proceedings of HICSS, 2002.

[8] Y. Sasson, D. Cavin, and A. Schiper, Probabilistic broadcas for flooding in wireless mobile ad-hoc networks, Proceedings of IEEE Wireless communication and networks (WCNC), 2003.

[9] B. Williams and T. Camp, Comparison of broadcasting techniques for mobile ad hoc networks, MOBIHOC, 2002, pp. 9-11.

[10] F. Chung and L. Lu, The diameter of sparse random graphs, Advances in Applied Mathematics 26 (2001), 257-279.

[11] [7] A.Z. Broder, A.R. Karlin, P. Raghavan, and E. Upfal, Trading space for time in undirected s i t connectivity, ACM Symposium on Theory of Computing (STOC), 1989, pp. 543-549.

[12] Uriel Feige, A tight upper bound on the cover time for random walks on graphs, Random Struct. Algorithms 6 (1995), no. 1,51-54.

**Claims**

1. A collaborative system for protecting against the propagation of malwares in a network, which comprising a plurality of network stations, wherein each station comprises:

   a. a detection module for locally scanning said station for possibly detecting a malware every T time units;
   b. an output unit;
   c. a list containing the values of parameters TTL, X, ρ and T
   d. a first list for indicating safe applications;
   e. second list indicating unclassified applications;
   f. a third list indicating malwares;
   g. a network unit adopted to:

      g.1. send an alert message to X other network stations upon detection of a malware by said detection module wherein each alert message comprises the ID of said detected malware, and a TTL value, wherein said TTL value indicates the number of times said alert message should be transmitted before it is discarded;
      g.2. perform the following upon receipt of an alert message:

         g.2.1. list the malware ID identified in said alert message in said third list, and

            if ρ=1, notifying the user through said output unit, or
            if ρ>1, updating the number of alert messages received concerning said malware ID;

         g.2.2 checking the number of alert messages concerning said malware ID that were received and notifying the user through said output unit if said number of alert messages exceeds ρ> 1;
         g.2.3. for ρ≥1, checking if value of the TTL included in the alert message as received at the station is greater than 0, and if so, sending an additional alert message from the station to one or more other stations, wherein said additional alert message comprises said malware ID and a value of TTL decreased by 1 from the TTL included in the alert message as received at the station.

2. A collaborative system according to claim 1, further comprising a server for updating the values of TTL, X, ρ and T and sending the update to the station.

3. A collaborative system according to claim 1, wherein said malware is deleted from the station automatically if more than ρ alert messages concerning said malware ID were received.

4. A collaborative system according to claim 1, wherein the user is given an option to delete said malware from the station automatically if more than ρ alert messages concerning said malware ID were received.

5. A collaborative system according to claim 1, further comprising removing the malware ID identified in said alert message from said second list upon receipt of an alert message.

6. A collaborative system according to claim 1, wherein each station stores the addresses of said X other network stations.

7. A collaborative system according to claim 2, wherein said server stores the addresses of said X other network stations.

Fig. 1

Fig. 2

Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **K. Alzoubi ; P.J. Wan ; O. Frieder.** New distributed algorithm for connected dominating set in wireless ad-hoc networks. *Proceedings of HICSS,* 2002
- **F. Chung ; L. Lu.** The diameter of sparse random graphs. *Advances in Applied Mathematics,* 2001, vol. 26, 257-279
- **S. Crisostomo ; J. Barros ; C. Bettstetter.** Flooding the network: Multipoint relays versus network coding. *4th IEEE International Conference on Circuits and Systems for Communications (ICCSC),* 2008, 119-124
- **P. Erdos ; A. Renyi.** On random graphs. *Publ. Math. Debrecen,* 1959, vol. 6, 290-291
- **Z. Haas ; J. Halpern ; L. Li.** Gossip-based ad-hoc routing. *IEEE/ACM Transactions of networks,* 2006, vol. 14 (3), 479-491
- **W. Lou ; J. Wu.** On reducing broadcast redundancy in ad-hoc wireless networks. *IEEE Transactions on Mobile Computing,* 2002, vol. 1 (2), 111-123

- **L.V.A. Qayyum ; A. Laouiti.** Multipoint relaying for flooding broadcast messages in mobile wireless networks. *Proceedings of HICSS,* 2002
- **Y. Sasson ; D. Cavin ; A. Schiper.** Probabilistic broadcas for flooding in wireless mobile ad-hoc networks. *Proceedings of IEEE Wireless communication and networks (WCNC),* 2003
- **B. Williams ; T. Camp.** Comparison of broadcasting techniques for mobile ad hoc networks. *MOBIHOC,* 2002, 9-11
- **A.Z. Broder ; A.R. Karlin ; P. Raghavan ; E. Upfal.** Trading space for time in undirected s t connectivity. *ACM Symposium on Theory of Computing (STOC),* 1989, 543-549
- **Uriel Feige.** A tight upper bound on the cover time for random walks on graphs. *Random Struct. Algorithms,* 1995, vol. 6 (1), 51-54